# EUROPÄISCHE PATENTSCHRIFT

(11) **EP 0 329 915 B1**
(45) Veröffentlichungstag und Bekanntmachung des Hinweises auf die Patenterteilung: **10.03.1993**
(21) Anmeldenummer: 88710058.4
(22) Anmeldetag: 30.12.1988
(51) Int. Cl.: E21C 25/10, E21C 25/18, E21B 10/12

(54) **Exzentrisch angeordnete, drehend gelagerte Welle für Bohrwerkzeuge**
Shaft for drilling tools, eccentrically arranged and rotatably mounted
Arbre arrangé excentriquement et monté rotativement pour outils de forage

(30) Priorität: 30.12.1987 CH 5101/87
(43) Veröffentlichungstag der Anmeldung: 30.08.1989
(73) Patentinhaber: Bechem, Hannelore, D-58093 Hagen (DE)
(72) Erfinder: Bechem, Ulrich, D-5800 Hagen 1 (DE); Bechem, Klaus, D-5800 Hagen 1 (DE); Bechem, Philip, D-5800 Hagen 1 (DE); Lenzen, Dieter, D-5060 Letmathe (DE)

(56) Entgegenhaltungen:
- CH-A- 653 742
- GB-A- 2 015 621

## Beschreibung

Die Erfindung betrifft eine Vorrichtung nach dem Oberbegriff des Anspruchs 1. Eine derartige Vorrichtung ist aus der CH-A-653742 bekannt.

Es gibt diverse Systeme, Rollen- oder Fräsbohrwerkzeuge zu aktivieren d.h. schlagend arbeiten zu lassen z.B. über Exzenter, die frei drehende oder angetriebene Bohrwerkzeuge tragen; dieses System hat u.a. den Vorteil, ausgewuchtet werden zu können. Damit werden die sonst schwierig beherrschbaren Schwingungsprobleme eliminiert.

Mit der nachfolgend beschriebenen erfindungsgemäßen Technik werden u.a. folgende erheblichen Vorteile erreicht:
- daß man des oder die eigentlichen Bohrwerkzeuge weiter vom Antriebsgehäuse entfernen kann, um z.B. mit Scheiben oder Disken mit größeren Vorgaben Gestein oder dgl. hinterschneidend abtragen zu können - vorzugsweise fräsend schlagend.
- daß auf einer Seite zwei angetrieben fräsende Werkzeuge angeordnet werden können, wobei der Antrieb für das äußere Werkzeug von der Rück- / Gegenseite des Aggregates erfolgt.
- daß man insofern keine Dichtungsprobleme mehr hat als konventionelle zentrische Dichtungen verwendet werden können - des von der Rück- / Gegenseite her über die exzentrische Welle angetriebene Werkzeug wahlweise auf optimale langsame Drehzahlen zu bringen - durch einen gesonderten Antrieb - unabhängig von der Drehzahl der gesondert angetriebenen schnellaufenden Exzenterhülse.

### Beispiel:

Die die exzentrisch gelagerte Welle tragende Hülse / Welle läuft mit 4.000 U/min - und das Werkzeug mit Zähnen oder dgl. von 300 mm ⌀ und 5 mm Dicke fräst schlagend mit 100 U/min. Die Amplitude ist 5 mm. Der Andruck zum Schlitzen / Hinterschneiden härtesten Gesteins beträgt max. 100 kg.

Ein Ausführungsbeispiel der Erfindung ist in den Figuren dargestellt. Es zeigen:

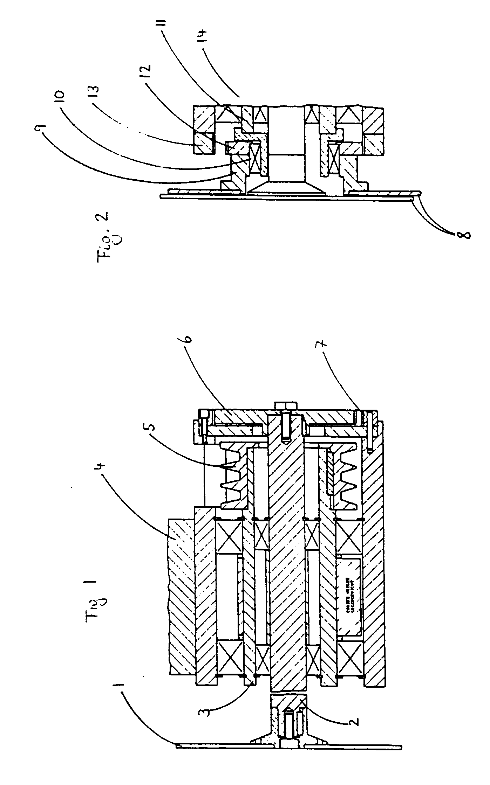

In Figur 1 ist 1 das schlagende Schneid- oder Schrämwerkzeug, das auf der Welle 2 angeordnet ist; diese Welle ist in der Hülse / Welle 3 frei drehend exzentrisch gelagert. Die Hülse / Welle 3 wird über 5 gesondert angetrieben über Keilriemen, Zahnräder oder dgl. In dieser Ausführung wird die Welle 2 mit dem Werkzeug 1 über einen fest an ihr angeordneten Außenzahnkranz 6 extrem untersetzt angetrieben; dieser Außenzahnkranz läuft in einem am stehenden Gehäuse fest montierten um die Amplitude größeren Innenzahnkranz exzentrisch ab - woraus des extrem untersetzte Drehen der Welle 2 resultiert. - Des System wird über verstellbare Gegengewichte ausgewuchtet.

In Figur 2 sind mit 8 zwei Scheibenwerkzeuge dergestellt; sie können nur schlagend arbeiten oder wie dargestellt, mit Fräsantrieb versehen sein; das dem Gestein zugewandte Werkzeug ist außen flach, um Gestein oder dgl. hinterschneidend abtragen zu können. 9 ist der Träger des einen inneren Werkzeuges, der in 10 auf der schnelldrehenden Hülse / Welle 11 frei drehend gelagert ist - jedoch wie in Figur 1 erklärt - über den Außenzahnkranz / Zahnrad 12 und den Innenzahnkranz 13 angetrieben wird - langsam rotierend. Das Aggregat 14 entspricht im übrigen dem in Figur 1 dargestellten. Bei o.a. Fräsantrieb sind die Werkzeuge mit Zähnen, Picken oder dgl. versehen.

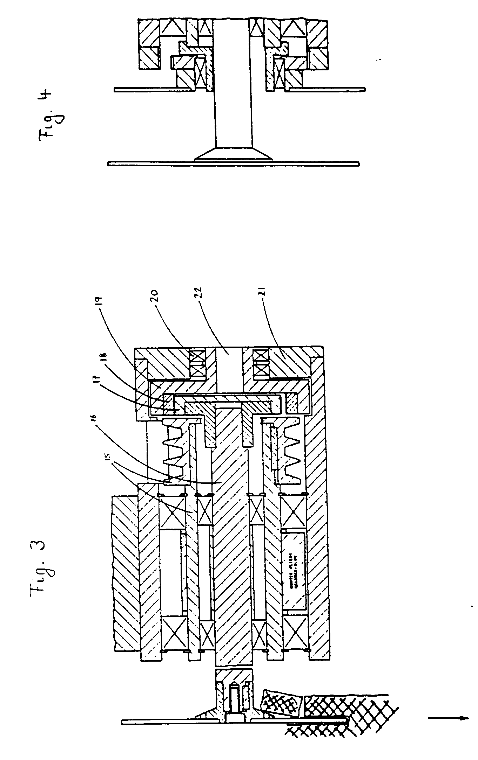

In Figur 3 ist die Antriebsseite dargestellt. Hierin ist 15 die schnellaufend / angetriebene Hülse, 16 ist die langsam laufende gesondert angetriebene Welle für das auf der Gegenseite installierte Bohrwerkzeug. Die Welle 16 kann außen über Keilriemen, Gelenkwelle, Zahnräder oder dgl. gesondert angetrieben werden. Es erfolgt die Untersetzung über den vorerwähnten Außenzahnkranz 17 bzw. Innenzahnkranz.

Der Innenzahnkranz 18 ist an der dargestellten Hülse 19 befestigt. Diese Hülse ist durch die Lager 20 zentrisch im stehenden Gehäuse 21 frei drehend gelagert. Der damit drehzahlregelbare zentrische Antrieb erfolgt über die Welle 22.

Die Figur 4 entspricht Figur 2 mit dem Unterschied, daß dieses System 2 Schlitze fräst und / oder 2 Schichten hinterschneidend abträgt.

## Patentansprüche

1. Vorrichtung zum exzentrischen Antrieb von Bohr-/Schneidwerkzeugen mit einer Welle zum Anordnen der Bohr- / Schneidwerkzeuge dadurch gekennzeichnet, daß ein Gehäuse mit einer im Gehäuse drehbar gelagerten Gegengewichte aufweisenden - antreibbaren Hülse (3) vorhanden ist, daß die Welle (2) in der Hülse (3) drehend gelagert und exzentrisch angeordnet ist und daß ein Antrieb zum Antreiben der Welle (2) für die Bohr-/Schneidwerkzeuge (1) vorhanden ist.

2. Vorrichtung nach Anspruch 1 oder 2 dadurch gekennzeichnet, daß der Antrieb auf der Gegenseite der werkzeugtragenden Seite erfolgt.

3. Vorrichtung nach Anspruch 3 dadurch gekennzeichnet, daß der Antrieb dadurch erfolgt, daß ein exzentrisch drehender kleinerer Außenzahnkranz in einem feststehenden größeren Innenzahnkranz exzentrisch abläuft.

4. Vorrichtung nach Anspruch 3 dadurch gekennzeichnet, daß ein exzentrisch mitdrehender größerer Innenzahnkranz um einen feststehenden kleineren Außenzahnkranz abläuft.

## Claims

1. Device for the excentric drive of drilling and cutting tools, with a shaft for the arrangement of the drilling /cutting tools characterized by the fact, that there is a casing with a drivable bushing (3) having counterweights which is pivoted in the casing, that the shaft (2) is rotatably mounted and eccentrically arranged in the bushing and that a drive is available to drive the shaft (2) for the drilling / cutting tools (1).

2. Device characterized according to claim 1 or 2 by the fact that the drive occurs on the opposite side of the tool carrying side.

3. Device characterized according to claim 3 by the fact that the drive occurs in such a way that an eccentrically rotating smaller external toothed ring runs eccentrically in a fixed larger internal toothed ring.

4. Device characterized according to claim 3 by the fact that an excentrically rotating larger internal toothed ring runs around a fixed smaller external toothed ring.

## Revendications

Prétentions à une lettre de patente.

1. Dispositif pour la commande excentrique d'outils de forage et d'outils tranchants avec un arbre d'arrangement des outils de forage et des outils tranchants se caractérisant par la présence d'une boite avec un étui commandable (3) qui comprend des contrepoids montés rotativement dans la boite. L'arbre (2) est monté rotativement et arrangé excentriquement dans l'étui (3) ; et il existe une commande pour mettre en marche l'arbre (2) des outils de forage et des outils tranchants (1) .

2. Le dispositif d'après la prétention 1 ou 2 se caractérise par le fait que la mise en marche a lieu sur le coté opposé au coté qui porte les outils .

3. Le dispositif d'après la prétention 3 se caractérise par le fait que la mise en marche se produit de la facon suivante : une petite couronne dentée extérieure excentriquement rotative tourne excentriquement dans une grande couronne dentée intérieure qui ne bouge pas.

4. Le dispositif d'après la prétention 3 se caractérise par le fait qu'une grande couronne dentée intérieure - rotativement excentrique elle aussi - tourne autour d'une petite couronne dentée extérieure qui ne bouge pas .
